**Europäisches Patentamt**

**European Patent Office**

**Office européen des brevets**

(11) Veröffentlichungsnummer : **0 435 310 B1**

(19)

(12)

# EUROPÄISCHE PATENTSCHRIFT

(45) Veröffentlichungstag der Patentschrift :
**07.04.93 Patentblatt 93/14**

(51) Int. Cl.⁵ : **B01J 35/02,** B01J 23/88,
C10G 45/04

(21) Anmeldenummer : **90125658.6**

(22) Anmeldetag : **28.12.90**

(54) **Katalysatorformkörper für die Abscheidung von anorganischen Verunreinigungen.**

(30) Priorität : **29.12.89 DD 336685**

(43) Veröffentlichungstag der Anmeldung :
**03.07.91 Patentblatt 91/27**

(45) Bekanntmachung des Hinweises auf die
Patenterteilung :
**07.04.93 Patentblatt 93/14**

(84) Benannte Vertragsstaaten :
**BE DE DK FR GB IT LU NL**

(56) Entgegenhaltungen :
**EP-A- 0 013 980**
**EP-A- 0 052 894**
**DD-A- 218 736**

(73) Patentinhaber : **LEUNA-WERKE AG**
**Thälmann-Platz**
**O-4220 Leuna 3 (DE)**

(72) Erfinder : **John, Heino, Dr.**
**Brüderstrasse 15**
**O-4020 Halle (DE)**
Erfinder : **Neubauer, Hans-Dieter, Dr.**
**Sorbenweg 4**
**O-4200 Merseburg (DE)**

Erfinder : **Berrouschot, Hans-Dieter**
**Weissenfelserstrasse 10**
**O-4851 Langendorf (DE)**
Erfinder : **Birke, Peter, Prof. Dr.**
**Block 620/4**
**O-4090 Halle-Neustadt (DE)**
Erfinder : **Merk, Ralf**
**Hanns-Eisler-Strasse 69**
**O-4203 Bad Dürrenberg (DE)**
Erfinder : **Günschel, Holger**
**A.-Meissner-Strasse 21**
**O-4800 Naumburg (DE)**
Erfinder : **Bergmann, Karl-Heinz**
**Tagewerbenerstrasse 9**
**O-4850 Weissenfels (DE)**
Erfinder : **Fabian, Julius**
**Windmühlenstrasse 19**
**O-4203 Bad Dürrenberg (DE)**
Erfinder : **Limmer, Heinz, Dr.**
**Ernst-Thälmann-Strasse 168**
**O-1330 Schwedt (DE)**
Erfinder : **Franke, Hermann, Dr.**
**F.-F.-Runge-Strasse 10**
**O-1330 Schwedt (DE)**
Erfinder : **Schütter, Hartmut, Dr.**
**F.-Wolf-Ring 26**
**O-1330 Schwedt (DE)**
Erfinder : **Höpfner, Eberhard**
**Am Holzhafen, 5**
**O-1330 Schwedt (DE)**
Erfinder : **Dietrich, Detlev**
**Grüne Strasse 38**
**O-1321 Vierraden (DE)**

EP 0 435 310 B1

**Beschreibung**

Die Erfindung betrifft Katalysatorformkörper für die Abscheidung von anorganischen Verunreinigungen bei der Hydroraffination, die als Schutz- und/oder Übergangskatalysatorbett zur verbesserten Abscheidung anorganischer Verunreinigungen eingesetzt werden.

Beim Festbetthydroraffinationsverfahren unter Verwendung teilchenförmiger Katalysatoren, die eine Kombination einer Verbindung der IV. Nebengruppe des PSE und einer Verbindung der Eisengruppe auf einem porösen Oxid enthalten, lagern sich in der oberen Schicht des Katalysatorbetts während des Betriebs anorganische Verunreinigungen ab, die zusammen mit wasserstoffarmen Kohlenwasserstoffen allmählich eine feste Kruste bilden und die Durchlässigkeit so weit verschlechtern, daß sich ein hoher Differenzdruck in der Anlage ergibt, der zum Abstellen der Anlage zwingt. Die Verunreinigungen können durch Korrosion und Erosion der Anlagenteile entstehen und vom Kohlenwasserstoffstrom bis ins Katalysatorbett transportiert werden, oder sie stammen aus dem Kohlenwasserstofföl, das anorganische Inhaltsstoffe in Form von kolloid-dispersen Teilchen oder als gelöste metallorganische Verbindungen enthalten kann. Der überwiegende Teil besteht aus Eisensulfid ($FeS_2$), einem Anlagenkorrosionsprodukt, das infolge katalytischer Wirkung die Abscheidung der im Öl enthaltenen Verbindungen, wie die des Arsens, Nickels oder Vanadiums fördern kann und somit die Verdichtung beschleunigt.

Zur besseren Verteilung und Aufnahme des anorganischen Schmutzes wurden Hohlstrangkatalysatorformkörper entwickelt (DD-PS 111 926; K. Becker, Chem. Techn., 29 (1977) 141). Damit konnte schon eine deutliche Laufzeitverlängerung der Katalysatorbefüllung erzielt werden. Dennoch haben Hohlstrangformlinge noch Nachteile. Die Strömung wird im inneren Kanal des Formlings verlangsamt, und aufgrund dessen lagern sich dort bevorzugt die Verunreinigungen ab, bis der innere Kanal verstopft ist. Danach werden die weiteren ankommenden Schmutzteilchen auf das darunter liegende Katalysatorbett mit meist kleinen Katalysatorteilchen gespült, die wiederum wie ein Filter wirken und den das Hohlstrangkatalysatorbett durchströmenden Staub in einer dünnen Schicht im oberen Teil aufnehmen. Sobald das geschieht, baut sich wiederum ein hoher Differenzdruck auf.

Weiterhin besitzt der Hohlstrangformling keine besonders hohe Wirksamkeit bei der Raffination, weil er nur eine kleine geometrische Oberfläche besitzt und das Kohlenwasserstofföl das Bett aus Hohlstrangformlingen schnell durchströmt.

Modifizierte Hohlstrangformlinge werden in der SU-PS 526 381 beschrieben. Das Profil besteht aus einem hohlen Kern und vier oder mehr Erhebungen. Andere modifizierte Hohlstränge werden in der SU-PS 4 518 263 (vgl. auch C. J. Pereira u. a., Applied Catalysis 42 (1988) 47-60) beschrieben. Diese als Minilith bezeichneten Katalysatorformkörper mit Wagenradprofil besitzen wie alle Hohlstränge den Nachteil, daß während des Einsatzes infolge der verlangsamten Strömung sich die inneren Kanäle bald zusetzen oder zukoken und danach nur noch die äußeren Oberflächen katalytisch genutzt werden können. Außerdem ist die Herstellung dieser modifizierten Hohlstrangformkörper relativ aufwendig und materialintensiv.

Profilierte Formkörper werden als Hydroraffinationskatalysatoren in großem Umfang technisch genutzt, z. B. solche mit Kleeblattprofil (vgl. K. Becker u.a., Chem. Techn. 34 (1982) 421) oder Wirbelprofil (DD-PS 207 464). Diese besitzen auch hohe Wirksamkeit, insbesondere wenn sie kleindimensioniert (1 bis 1,5 mm umschreibender Durchmesser) sind. Allerdings haben sie den Nachteil, daß die Profilarme der Formlinge in der Schüttung ineinandergreifen und so der Lückenvolumenanteil für die Aufnahme von Schmutz gering bleibt. Diese hier unerwünschte Verdichtung, die ein Lückenvolumenanteil von über 50 % kaum zuläßt, soll mit Katalysatorformkörpern verhindert werden, bei denen das Ineinandergreifen der Profilteile in der Schüttung nicht erfolgt. In der GB-PS 2193907 und der DE-OS 3141942 werden solche Katalysatorformen beschrieben, bei denen die Breite der Erhebungen größer ist als die Breite der Längsvertiefungen. Abgesehen davon, daß die Herstellung solcher Formkörper kompliziert ist, kann man bestimmte Größen der Formlinge nicht unterschreiten, weil sie dann zerbrechen. Die Festigkeit läßt zu wünschen übrig, und die Wirksamkeit ist zu gering.

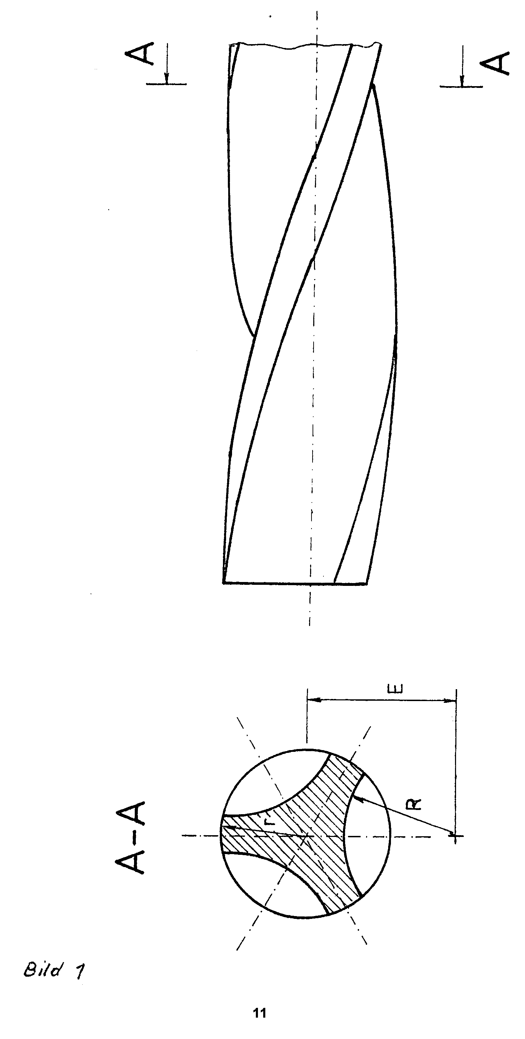

In EP 13980 werden Katalysatoren beschrieben, die die Form eines gewundenen Doppelzylinders haben, wobei der Steigungswinkel alpha 40 bis 45 ° gemäß Fig. 1 a beträgt. Ein Nachteil des gewundenen Doppelzylinders besteht darin, daß die infolge des kleinen Steigungswinkels und der stark abgerundeten Form die Flüssigkeit vom Katalysator schnell abtropft bzw. von einem Formling zum anderen relativ schnell transportiert wird. Dadurch wird das Fließen der Flüssigkeit in Längsrichtung vermindert, so daß der zurückgelegte Weg der Flüssigkeitsmoleküle in der Katalysatorschicht gering ist, was sich negativ auf die Rückhaltezeit im Katalysatorbett auswirkt. Somit kann man nicht die gewünschten Umwandlungstiefen erzielen.

Das EP 218 147 beschreibt polylobale (drei- und vierblättige) Querschnittsprofilextrude, die um ihre Längsachse mit einem Steigungswinkel von 50 ° gewunden sind. Mit dieser Form können Vorteile erzielt werden, wenn Druckverlustprobleme im Reaktor auftreten. Dennoch konnten bedeutende Nachteile nicht überwunden werden.

Das betrifft die Meniskusbildung in den Vertiefungen zwischen den Kreisabschnitten des Profils. Dadurch fließt die Flüssigkeit vorzugsweise in vorgebildeten Rinnen und tropft vom Formling vorzeitig ab, so daß das Rückhaltevermögen vermindert ist.

Als verbesserungswürdige Eigenschaften der bekannten Katalysatorformen sind zu nennen:
- Verbesserung der Herstellbarkeit
- Verbesserung der mechanischen Stabilität
- hydrodynamisches Verhalten
- Verbesserung der katalytischen Wirksamkeit
- Verbesserung des Aufnahmevermögens für Schmutz und Erhaltung der Durchlässigkeit während des Betriebs

Die Auswirkungen der Katalysatorgestalt auf alle diese Größen sind bisher nicht vorhersehbar, so daß keine Möglichkeit besteht, die optimale Katalysatorform für den jeweiligen Anwendungsfall vorherzuberechnen (vgl. H. Spindler, G. Vojta, P. Birke; Vortrag zum XXII. Jahrestreffen der Katalytiker der DDR, Schloß Reinhardsbrunn 29. - 31. 3. 1989, Tagungsbericht S. 21).

Das Ziel der Erfindung besteht darin, einen Katalysatorformkörper vorzuschlagen, der bei der Abscheidung von anorganischen Verbindungen im Hydroraffinationsprozess aufgrund verbesserter Eigenschaften effektiver arbeitet als die bisher bekannten Katalysatorformen und die Standzeit der Katalysatorfüllungen wesentlich verlängert.

Der Erfindung liegt die Aufgabe zugrunde, einen Katalysatorformkörper zu entwickeln, der in einfacher Weise mit hoher mechanischer Stabilität hergestellt werden kann und bei gutem hydrodynamischen Verhalten eine erhöhte Wirksamkeit bezüglich katalytischer Aktivität, Verbesserung des Schmutzaufnahmevermögens und Erhaltung der Durchlässigkeit, ermöglicht.

Die Aufgabe wird durch einen Katalysatorformkörper gelöst, der aus einer porösen Aluminiumoxidkomponente und sulfidischen Hydriermetallverbindungen besteht und ein dreiarmiges Querschnittsprofil mit einem umschreibenden Durchmesser von 1,5 bis 3,4 mm besitzt, und dessen Arme um den inneren Kern des Festkörpers gleichmäßig verteilt sind und nicht in die Aussparungen eines benachbarten Formkörpers eingreifen. Erfindungsgemäß ist das Profil um seine Längsachse mit einem Steigungswinkel $\alpha$ von 65 bis 72 ° schraubenförmig verdreht, das Verhältnis der Katalysatorformkörperlänge zur Steigungshöhe beträgt 0,3 bis 0,6 und das Produkt aus umschreibendem Durchmesser und dem Verhältnis von geometrischer Oberfläche zu geometrischem Volumen (d . $\frac{O}{V}$) nimmt Werte von 9,3 bis 13 an.

Die Verdrehung des Profils um seine Längsachse kann rechts- oder linkssinnig sein, wobei die gleichen Effekte eintreten.

Das bei dem erfindungsgemäßen Formkörper zur Anwendung kommende Profil besteht aus drei Armen, die um einen zentralen Kern gleichmäßig angeordnet und durch konkave Bogen miteinander verbunden sind, z. B. das sogenannte Wirbelprofil, wie es in der DD-PS 218 736 beschrieben wurde. Beispiele für Profile, die für den erfindungsgemäßen Formkörper verwendet werden, zeigt Bild 1.

Dabei bedeuten:
r = Radius des zentralen Kreises
R = Radius des schneidenden Kreises
E = Auslenkung (Exzentrizität des schneidenden Kreises)

Aus diesen Angaben und dem Steigungswinkel lassen sich die geometrische Oberfläche und das geometrische Volumen der Katalysatorformkörper berechnen.

Der Steigungswinkel errechnet sich nach der Formel alpha = arc tan $\frac{h}{\pi.d}$

wobei h die Höhe einer vollen Umdrehung des Profils um die Längsachse ist und d der umschreibende Durchmesser des Profils, wenn man einen Kreis um die drei äußeren Punkte legt, darstellt.

Kleinere Winkel als 65 ° sind bei Formlingen des hier beanspruchten umschreibenden Durchmesser weniger geeignet, da durch die Verkürzung einer Umdrehung ähnlich wie bei den Katalysatorformkörpern des EP 13980 und des EP 218 147 die Flüssigkeit vom Katalysatorformling durch die Rinnen zusammenläuft und abtropft. Infolge des erfindungsgemäß angewendeten Steigungswinkels verteilt sich die Kohlenwasserstoffflüssigkeit gleichmäßig als Ölfilm auf dem Katalysatorformling und geht in Richtung der Schwerkraft auf den nächsten Formling über. Man vermeidet durch das erfindungsgemäße Profil und die spezielle Verdrehung um die Längsachse auch die Bildung von Tropfen. Es ergibt sich trotz des hohen Lückenvolumens ein größeres Rückhaltevermögen des Öls am Katalysator, ein besserer Austausch zwischen der wasserstoffreichen Gasphase und der flüssigen Ölphase, eine längere Verweilzeit der Ölmoleküle am Katalysatorkorn und damit mehr Reaktionsmöglichkeiten und günstigere Reaktionsbedingungen. Die Veteinheitlichung der Reaktionsbedingungen im Katalysatorbett führt zu einem höheren Umsatz als bei Katalysatoren gemäß Stand der Technik.

Infolge des Gehalts an hydrieraktiven Komponenten ist der Katalysator in der Lage zu entschwefeln, aber auch zu demetallisieren und anorganische Schwermetallverbindungen aufzunehmen. Je nach Charakter der anorganischen Verbindungen im Kohlenwasserstofföl scheiden sich die Metallverbindungen vorzugsweise im Lückenvolumen oder im Katalysatorkorn ab. Die kolloid-dispersen Verunreinigungen durch Eisenverbindungen sowie Aschebestandteile lagern sich im Lückenvolumen ab. Der erfindungsgemäße Katalysator hat dafür eine hohe Kapazität, da das Lückenvolumen zwischen etwa 50 und 60 % beträgt und die Verschmutzungen über eine längere Strecke im Katalysatorbett eingelagert werden. Infolge der günstigen Reaktionsmöglichkeiten am erfindungsgemäßen Katalysator ist die Abscheidung von Metallen im Katalysatorkorn ebenfalls günstiger als an Demetallisierungskatalysatoren des bekannten Typs, wenn die Anforderungen an die Porenverteilung und Textur zusätzlich erfüllt sind.

Die vorteilhaften Wirkungen des erfindungsgemäßen Katalysators hängen weiterhin von der Einhaltung des Verhältnisses von Katalysatorformkörperlänge zu Steigungshöhe ab. Bei Unterschreitung des unteren geforderten Wertes treten die Effekte der Verdrillung nicht mehr in Erscheinung. Bei Überschreitung des oberen Wertes sind die Formkörper zu lang und verursachen Unregelmäßigkeiten in der Schüttung.

Von besonderer Bedeutung ist auch das Produkt aus umschreibendem Durchmesser und dem Verhältnis von geometrischer Oberfläche zu geometrischem Volumen ($d \cdot \frac{O}{V}$). Dieser Wert zeigt unabhängig vom Formlingsdurchmesser die Fähigkeit des Katalysators an, den Ölfilm auf der Oberfläche zu verteilen und somit für eine gleichmäßige Verteilung der anorganischen Verunreinigungen im Katalysatorbett und im -formling zu sorgen. Die bisher verwendeten Katalysatoren ließen größere $d \cdot \frac{O}{V}$-Werte als 8,3 nicht zu, wenn das Lückenvolumen 50 % erreicht oder unterschreitet. Aus Herstellungs- und Festigkeitsgründen kann ein $d \cdot \frac{O}{V}$-Wert über 13 nicht überschritten werden.

Die nachfolgende Tabelle zeigt, welche Werte $d \cdot \frac{O}{V}$ die Katalysatoren annehmen können und welches Lückenvolumen in der Schüttung erzielt wird.

| Katalysatorform | $d \cdot \frac{O}{V}$ | Lückenvolumen in % |
|---|---|---|
| Hohlstrang | 7 | 55 |
| Wirbelstrang | 8,5 – 13 | 48 |
| Formling nach | | |
| . GB-PS 2193907 | 8,0 – 8,3 | ) |
| . DE-OS 3141942 | 8,0 – 8,3 | ) |
| . EP 13080 | 7,5 | ) ca. 50 |
| . EP 218147 | | |
| – 3blättrig | 6,82 | ) |
| – 4blättrig | 7,8 | ) |
| erfindungsgemäß | 8,5 – 13 | 50 – 60 |

Die nicht verdrillten Wirbelstränge können zwar einen ebenso hohen $d \cdot \frac{O}{V}$-Wert wie der erfindungsgemäße Katalysator aufweisen. Sie sind aber weniger wirksam bei der Demetallisierung infolge geringerer Aktivität und infolge des geringeren Lückenvolumens auch weniger aufnahmefähig für Schmutz im Katalysatorbett.

Vorteilhaft ist weiterhin, daß die Schüttung des erfindungsgemäßen Katalysators sehr geringe Differenzdrücke ergibt, die noch deutlich niedriger als bei den Kleeblattformen des EP 218147 ist.

Die Einstellung des Lückenvolumens auf Werte zwischen 50 und etwa 60 % ist zum einen durch die Wahl des Profils und/oder durch die Länge der Formlinge, aber auch dadurch möglich, daß man Formlingsgemenge aus rechts- und linkssinnig verdrehten Profilsträngen einsetzt. Bei letzterer vorteilhafter Ausführung erhält man besonders hohe Lückenvolumina zur Aufnahme von Schmutz.

Vorzugsweise Zusammensetzungen sind Katalysatorformkörper der erfindungsgemäßen Art mit 10 % (jeweils in Masseanteilen) Nickel als Nickeloxid, 8 % Molybdän(VI)-oxid sowie Gamma-Aluminiumoxid mit 2 % Siliziumdioxid. Der Katalysator besitzt eine für Hydroraffinationskatalysatoren übliche Porenverteilung, z. B. mit einem Gesamtporenvolumen von 0,50 cm³/g, wobei der größte Anteil von Poren auf solche mit einem Radius von etwa 3 nm fallen und ein kleinerer Anteil (z. B. 20 %) auf Übergangs- und Makroporen mit Radien von über 10 nm. Ein solcher Katalysator wird beispielsweise als Übergangskatalysator und Schutzkontakt zwischen einer Schicht aus Hohlstrangformlingen und kleinen Wirbelstrangformlingen bei der Hydroraffination von Dieselkraftstofffraktionen eingesetzt. Infolge des hohen Nickelgehalts fängt der Katalysator besonders Arsenverbindungen ab und schützt so das Hauptkatalysatorbett aus kleinen Formlingen vor Vergiftung.

Eine andere vorzugsweise Katalysatorzusammensetzung besteht aus 4 % (in Masseanteilen) Nickel als Nickeloxid, 20 % Molybdän(IV)-oxid sowie gamma-Aluminiumoxid mit 2 % Siliziumdioxid. Dieser Katalysator hat vorzugsweise Poren im Radienbereich von 3 bis 7 nm und wenig (z. B. 10 % des Gesamtporenvolumens) größere Poren. Der Katalysator (z. B. mit umschreibenden Durchmesser von 2,5 mm) eignet sich als Übergangskatalysator zwischen einem Schutzkatalysator in Form von Hohlsträngen (5 mm Außendurchmesser) und dem Hauptkatalysatorbett aus kleinen Wirbelsträngen (1,7 mm Durchmesser). Die Katalysatorschicht aus den erfindungsgemäßen Formlingen verlängert die Laufzeit der Katalysatorcharge durch die bessere Verteilung von Schmutz um ca. 30 %.

Der Katalysatorformkörper kann auch eine Aluminiumoxidkomponente enthalten, die ein Porenvolumen von mindestens 0,20 cm³/g im Porenradienbereich von 7,5 bis 50 nm besitzt. Daneben enthält er wahlweise auch Poren mit Radien von 3 bis 7,5 nm. Er enthält sulfidische Hydriermetallverbindungen, z. B. des Nickels und des Molybdäns oder solche des Kobalts, Wolframs, Vanadiums, Eisens, Chroms u. a. Eine typische Zusammensetzung ist z. B. in Masseanteilen 1,5 % Nickel und 7 % Molybdän(IV)-oxid. Dieser Katalysator eignet sich insbesondere zur Demetallisierung von metallhaltigen Erdölfraktionen und wird vor das Hauptkatalysatorbett geschaltet.

Ausführungsbeispiele

Beispiel 1

In einem Wirbelmischer wurden folgende Ausgangsmaterialien gemischt:

110 kg einer Böhmittonerde (2 % eingefälltes $SiO_2$), die in einer Rohrschwingmühle mit zylindrischen Mahlkörpern auf eine Feinheit gemahlen wurde, die einen 100%igen Durchgang durch ein 10000er Maschensieb (0,063 mm Maschenweite) gestattet, 68 kg Nickel(II)-sulfat-Heptahydrat, 11 kg Molybdän(IV)-oxid, bezogen auf Glührückstand bei 450 °C, gemahlen.

Das Nickelsulfat wurde zuvor in 60 l Wasser gelöst. Nach Zugabe von 20 l Ammoniaklösung (ca. 20%ig) wurde das Gemenge 15 Minuten intensiv gemischt und anschließend durch Zugabe von weiterer Ammoniaklösung und Wasser eine Konsistenz eingestellt, die infolge der Plastizität der Masse die Formgebung in einer Schneckenstrangpresse gestattete. Zur Formgebung wurde die Masse durch eine Düsenplatte gedrückt, deren Düsen das Profil und die Gestalt des gewünschten austretenden Stranges hatten. Die Düsen waren aus Polyamid-6 durch Spritzguß gefertigt. Die Düseninnenwandung hatte eine besonders hohe Oberflächengüte, deren Rauhtiefe nur ca. 1 Mikrometer betrug. Die austretenden Extrudate wurden nach Austritt auf eine Länge abgeschnitten, die etwa dem drei- bis fünffachen Durchmesser entsprach. Zum Abschneiden wurden feine Stahldrähte verwendet, die direkt hinter der Düsenplatte während des Extrusionsvorganges hin- und herbewegt wurden.

Die Formlinge wurden bei 100 bis 120 °C getrocknet und bei 450 bis 500 °C geglüht. Die Katalysatorzusammensetzung war in Masseanteilen:

| | | | |
|---|---|---|---|
| NI | 10 % | ) | |
| $MoO_3$ | 3 % | ) | bezogen auf den |
| $SiO_2$ | 2,1 % | ) | Glührückstand |
| $Na_2O$ | 0,1 % | ) | bei 500° C/3 h |
| $Al_2O_3$ | zu 100,0 % | ) | |

Durch Einsatz verschiedener Düsen wurden verschiedenartige erfindungsgemäße Katalysatorformkörper erzeugt. Die Profile der Extrudate sind in Bild 1 dargestellt.

Durch den Einsatz verschiedener Düsen konnten Formlinge mit den Abmessungen erzeugt werden, die in der Tabelle 1 zusammengestellt sind. Zum Vergleich wurden auch Extrudate mit Wirbelprofil ohne Verdrehung (90°) mit umschreibendem Durchmesser von 3 mm sowie Extrudate mit verdrehtem vierblättrigem Kleeblattprofil hergestellt. Die Festigkeit der Extrudate war für technische Zwecke ausreichend. Die erfindungsgemäßen Katalysatorformkörper wiesen grundsätzlich Abriebfestigkeiten von 98 % und besser auf.

```
Vergleich der Lückenvolumina:

erfindungsgemäßer Katalysator 12              58 %

Extrudat mit Wirbelprofil ohne Verdrehung     50 %

Extrudat nach EP 218 147                       50 %.
```

Der erfindungsgemäße Katalysator besitzt gegenüber den Vergleichskatalysatoren ein höheres Lückenvolumen zur Aufnahme von Schmutz und eine bessere Durchlässigkeit in der Katalysatorschüttung.

Beispiel 2

150 kg der gleichen Böhmittonerde wie in Beispiel 1 wurden in einem Wirbelmischer mit soviel Wasser vermischt, daß eine extrudierbare Masse entstand. Zur Peptisation und Plastifizierung wurde noch 0,5 l 55%ige Salpetersäure zugegeben und dieser Ansatz im Wirbelmischer 15 Minuten intensiv mechanisch bearbeitet. Die erhaltene Masse wurde in einer Einschneckenstrangpresse geformt, indem sie durch Düsen aus spritzgegossenem Polyamid-6 gedrückt wurden. Als Düsen wurden dieselben eingesetzt, mit denen Katalysator 12 des Beispiels 1 erhalten wurde. Nach dem Trocknen bei 120 °C und dem Glühen bei 600 °C wurden Formlinge erhalten, die den Kenndaten des Katalysators 12 in Beispiel 1 entsprachen.

Diese Formlinge wurden zuerst mit einer salpetersauren, Aluminiumnitrat enthaltenden Lösung überstehend getränkt, nach Ablassen der Tränklösung mit 400 °C heißer Luft kalziniert und anschließend mit einer Lösung von Ammoniummolybdat und Ammoniumfluorid getränkt und nach Ablassen der übrig bleibenden Lösung bei 200 °C nochmals thermisch nachbehandelt. Konzentrationen der Tränklösung:

Für die 1. Tränkung:
. Ni in g/l            70
. $Al_2O_3$ in g/l      23,4
. $HNO_3$ in g/l        30

Für die 2. Tränkung (Temperatur der Tränklösung 60° C):
. $MoO_3$ in g/l       330
. F in g/l             66
. $NH_3$ in g/l        50 (ermittelt durch Titration gegen Methylorange)

Es wurde ein Katalysator mit folgender Zusammensetzung erhalten (in Masseanteilen):

Ni          4 %
$MoO_3$     20 %
F           4 %
$SiO_2$     1,3 %
$Al_2O_3$   zu 100,0 %

Zum Vergleich wurden Extrudate mit verdrehtem, vierblättrigen Kleeblattprofil gemäß EP 218 147 und umschreibendem Durchmesser von 3 mm hergestellt, die nach Trocknen und Glühen ebenso wie der erfindungsgemäße Katalysator dieses Beispiels getränkt und thermisch behandelt wurden.

Durch Differenzdruckmessungen im Luftstrom wurde ermittelt, daß der erfindungsgemäße, verdrillte Wirbelstrangkatalysator gegenüber dem Katalysator gemäß Stand der Technik nur 79 % des Druckverlusts in der Katalysatorschüttung aufweist. Somit ist der erfindungsgemäße Katalysator in der Lage, infolge des größeren Lückenvolumens und der besseren Durchlässigkeit mehr Schmutz in Form anorganischer Verbindungen aufzunehmen und einen längeren Betriebszyklus ohne Anstieg des Differenzdrucks über den Reaktor zu gewährleisten.

Beispiel 3

100 kg der gleichen Böhmittonerde wie in Beispiel 1 und 20 kg Acetylenruß P 1042 vom VEB Chemiewerk Coswig wurden mit 60 l Wasser und 0,5 l 55%iger Salpetersäure in einem Wirbelmischer 15 Minuten gemischt, so daß eine extrudierbare Masse entstand. Die erhaltene Masse wurde in einer Einschneckenstrangpresse geformt, indem sie durch Düsen aus spritzgegossenem Polyamid-6 gedrückt wurde. Als Düsen wurden dieselben eingesetzt, mit denen der Katalysator 12 des Beispiels 1 erhalten wurde. Nach dem Trocknen bei 120 °C wurden sie 12 Stunden bei 600 °C an der Luft geglüht. Dabei wurde der Ruß vollständig ausgebrannt. Es wurde ein modifizierter, Übergangsporen enthaltender gamma-Aluminiumoxidträger erhalten. Wie in Beispiel 1 und 2 wurden Formlinge gemäß EP 218 147 zum Vergleich erzeugt.

Die Porenradienverteilung der Extrudate wurde mittels Quecksilberporosimetrie für den Radienbereich von 7,5 bis 7500 nm ermittelt. Dabei ergaben sich folgende Werte (zum Vergleich die Werte der Trägerformlinge ohne Hydriermetallverbindungen nach Beispiel 2 hergestellt):

| Porenradius in µm | Formlinge nach Beispiel 2 Porenvolumen in $cm^3/g$ | Formlinge nach Beispiel 3 |
|---|---|---|
| 50 – 7500 | 0,20 | 0,10 |
| 7,5 – 50 | 0,40 | 0,03 |

Durch $N_2$-Adsorption wurde ein Porenvolumen von 0,51 $cm^3/g$ in Porenradienbereich von 1,25 bis 7,5 nm für beide Formlingstypen ermittelt. Durch die Rußmodifizierung wurde ein Aluminiumoxidträger mit einem erheblichen Porenvolumen im Übergangsporenbereich erzielt. Diese Poren sind für die Abscheidung von Nickel und Vanadium aus Ölfraktionen von besonderer Bedeutung. Daneben enthält der rußmodifizierte Träger noch die kleineren Reaktions-Poren in ausreichender Menge für die Entschwefelungsreaktionen.

Erfindungsgemäßer und Vergleichskatalysator wurden jeweils mit einer gemeinsamen ammoniakalischen Lösung von Nickelhydroxokarbonat und Ammoniummolybdat in Ammoniaklösung überstehend getränkt, so daß die fertigen Katalysatoren nach Ablassen der Lösung und Kalzinieren bei 450 °C 1,5 % Ni und 2 % $MoO_3$ enthielten.

Die Katalysatoren wurden zur Entschwefelung und Demetallisierung einer Erdölvakuumdestillatfraktion mit Anteilen an atmosphärischem Rückstand (Provinienz : sowjetisches Pipeline-Erdöl) eingesetzt.

Eigenschaften des Rohstoffs:

| | |
|---|---|
| $D_{20}$ in $g/cm^3$ | 0,923 |
| Basenzahl in mg $NH_3/l$ | 529 |
| Schwefelgehalt in % | 1,63 |
| Nickel in ppm | 6 |
| Vanadium in ppm | 25 |

Reaktionsbedingungen

| | |
|---|---|
| $H_2$-Druck in MPa | 6,0 |
| Belastung in v/vh | 1,0 |
| Temperatur in °C | 390 |
| Gas : Rohstoff-Verhältnis in Nl/l | 500 : 1 |

| Ergebnisse Raffinat: | Entschwefelung in % | Demetallisierung (Ni + V) in % |
|---|---|---|
| erfindungsgemäßer Katalysator | 90 | 89 |
| Vergleichskatalysator | 85 | 80 |

Tabelle 1

| Katalysator | 1 | 2 | 3 | 4 | 5 |
|---|---|---|---|---|---|
| zentr. Kreis, r in mm | 1,70 | 1,70 | 1,70 | 1,70 | 1,70 |
| schn. Kreis, R in mm | 1,85 | 1,85 | 1,85 | 1,85 | 1,85 |
| Auslenkung E in mm | 2,60 | 2,60 | 2,60 | 2,60 | 2,40 |
| Länge, L in mm | 13,00 | 13,00 | 21,00 | 21,00 | 13,00 |
| Steigungswinkel in grd | 35,00 | 70,00 | 65,00 | 70,00 | 35,00 |
| Steigung in mm | 22,91 | 29,35 | 22,91 | 29,35 | 22,91 |
| Korrekturfaktor f. Länge | 1,01 | 1,06 | 1,10 | 1,06 | 1,10 |
| Volumen in mm$^3$ | 62,45 | 60,23 | 100,88 | 97,30 | 40,81 |
| Oberfläche in mm$^2$ | 159,59 | 154,22 | 252,43 | 243,77 | 155,52 |
| Oberfl./Volumen in mm$^{-1}$ | 2,56 | 2,56 | 2,50 | 2,51 | 3,31 |
| d.o/v | 8,69 | 8,71 | 8,51 | 8,52 | 12,96 |
| Länge/Steigung | ,57 | ,44 | ,92 | ,72 | ,57 |

| Katalysator | 6 | 7 | 8 | 9 | 10 |
|---|---|---|---|---|---|
| zentr. Kreis, r in mm | 1,70 | 1,70 | 1,70 | 1,40 | 1,40 |
| schn. Kreis, R in mm | 1,85 | 1,85 | 1,85 | 1,55 | 1,55 |
| Auslenkung E in mm | 2,40 | 2,40 | 2,40 | 2,10 | 2,10 |
| Länge, L in mm | 13,00 | 21,00 | 21,00 | 11,00 | 11,00 |
| Steigungswinkel in grd | 70,00 | 85,00 | 70,00 | 65,00 | 72,00 |
| Steigung in mm | 29,35 | 22,91 | 29,35 | 18,36 | 27,07 |
| Korrekturfaktor f. Länge | 1,06 | 1,10 | 1,06 | 1,10 | 1,05 |
| Volumen in mm$^3$ | 39,36 | 65,92 | 63,58 | 30,67 | 29,22 |
| Oberfläche in mm$^2$ | 150,20 | 247,73 | 239,13 | 109,54 | 104,62 |
| Oberfl./Volumen in mm$^{-1}$ | 3,82 | 3,76 | 3,76 | 3,57 | 3,58 |
| d.o/v | 12,97 | 12,78 | 12,79 | 10,00 | 10,02 |
| Länge/Steigung | ,44 | ,92 | ,72 | ,58 | ,41 |

| Katalysator | 11 | 12 | 13 | 14 | 15 |
|---|---|---|---|---|---|
| zentr. Kreis, r in mm | 1,40 | 1,40 | ,75 | ,75 | ,75 |
| schn. Kreis, R in mm | 1,55 | 1,55 | ,85 | ,85 | ,85 |
| Auslenkung E in mm | 2,10 | 2,10 | 1,10 | 1,10 | 1,10 |
| Länge, L in mm | 19,00 | 19,00 | 5,00 | 5,00 | 10,00 |
| Steigungswinkel in grd | 65,00 | 72,00 | 65,00 | 72,00 | 65,00 |
| Steigung in mm | 18,36 | 27,07 | 10,11 | 14,50 | 10,11 |
| Korrekturfaktor $_3$ f. Länge | 1,10 | 1,05 | 1,10 | 1,05 | 1,10 |
| Volumen in mm$^3$ | 52,97 | 50,48 | 3,75 | 3,58 | 5,26 |
| Oberfläche in mm$^2$ | 185,53 | 177,04 | 31,36 | 29,94 | 51,51 |
| Oberfl./Volumen in mm$^{-1}$ | 3,50 | 3,51 | 3,36 | 8,37 | 8,23 |
| d.o/v | 9,81 | 9,82 | 12,53 | 12,56 | 12,35 |
| Länge/Steigung | 1,00 | ,70 | ,69 | ,41 | ,99 |

| Katalysator | 16 | 17 |
|---|---|---|
| zentr. Kreis, r in mm | ,75 | ,75 |
| schn. Kreis, R in mm | ,85 | ,85 |
| Auslenkung E in mm | 1,10 | 1,10 |
| Länge, L in mm | 10,00 | 10,00 |
| Steigungswinkel in grd | 69,00 | 72,00 |
| Steigung in mm | 12,28 | 14,50 |
| Korrekturfaktor $_3$ f. Länge | 1,07 | 1,05 |
| Volumen in mm$^3$ | 5,07 | 5,06 |
| Oberfläche in mm$^2$ | 50,04 | 49,14 |
| Oberfl./Volumen in mm$^{-1}$ | 8,24 | 8,24 |
| d.o/v | 12,36 | 12,37 |
| Länge/Steigung | ,81 | ,69 |

**Patentansprüche**

1. Katalysatorformkörper für die Abscheidung von anorganischen Verunreinigungen bei der Hydroraffination von Kohlenwasserstofffraktionen, der aus einer porösen Aluminiumoxidkomponente und Hydriermetallverbindungen besteht und ein dreiarmiges Querschnittsprofil mit einem umschreibenden Durchmesser von 1,5 bis 3,4 mm besitzt, und dessen Arme um den inneren Kern des Festkörpers gleichmäßig verteilt sind und durch konkave Bögen miteinander verbunden sind, gekennzeichnet dadurch, daß das Profil um seine Längsachse mit einem Steigungswinkel alpha von 65 bis 72 ° schraubenförmig verdreht ist, das Verhältnis der Katalysatorformkörperlänge zur Steigungshöhe 0,3 bis 0,6 beträgt und das Produkt aus umschreibendem Durchmesser und dem Verhältnis von geometrischer Oberfläche zu geometrischem Volumen (d . $\frac{O}{V}$) Werte von 8,5 bis 13 aufweist.

2. Katalysatorformkörper nach Anspruch 1, gekennzeichnet dadurch, daß die Verdrehung um die Längsachse rechts- oder linkssinnig ist.

3. Katalysatorformkörper nach Anspruch 1 und 2, gekennzeichnet dadurch, daß er in Massebestandteilen 10 % Nickel als Nickeloxid, 8 % Molybdän(VI)-oxid sowie gamma-Aluminiumoxid mit 2 % Siliziumdioxid als poröser Komponente enthält.

4. Katalysatorformkörper nach Anspruch 1 und 2, gekennzeichnet dadurch, daß er in Massebestandteilen 4 % Nickel als Nickeloxid, 20 % Molybdän(VI)-oxid sowie gamma-Aluminiumoxid mit 2 % Siliziumdioxid enthält.

5. Katalysatorformkörper nach Anspruch 1 und 2, gekennzeichnet dadurch, daß die Aluminiumoxidkomponente ein Porenvolumen von mindestens 0,20 cm³/g im Porenradienbereich von 7,5 bis 50 nm besitzt.

## Claims

1. Profiled catalyst body, consisting of a porous aluminium oxid component and hydrogenating metal compounds, and having a three-limbed cross sectional profil with an outer circular diameter from 1.5 to 3.4 mm, whereat these limbs are symmetrically arranged around the inner core of the solid body and connected with each other by concave arches, for settling of anorganic impurities in hydrorefining of hydrocarbon fractions, characterized in that the profil is twisted in a screw-like manner round its longitudinal axis with an inclination angle alpha from 65° to 72°, whereat the proportion of the length of the profiled catalyst body to the inclination height runs from 0.3 to 0.6, and the product of geometrical surface and geometrical volume, i.e. d x s/v, has values from 8.5 to 13.

2. Profiled catalyst body according to claim 1, characterized in that the twist round the longitudinal axis is either clockwise or anti-clockwise.

3. Profiled catalyst body according to claims 1 and 2, characterized in that it contains by mass 10 % nickel in form of nickel oxid, 8 % molybdic oxid, as well as gamma aluminium oxid with 2 % silicon dioxid as porous component.

4. Profiled catalyst body according to claims 1 and 2, characterized in that it contains by mass 4 % nickel in form of nickel oxid, 20 % molybdic oxid, as well as gamma aluminium oxid with 2 % silicon dioxid.

5. Profiled catalyst body according to claims 1 and 2, characterized in that the aluminium oxid component has a pore volume of at least 0. 20 cm³/g with a pore radius ranging from 7.5 to 50 nm.

## Revendications

1. Corps moulé de calalyseur pour la séparation d'impuretés inorganiques lors de l'hydroraffinage de coupes d'hydrocarbures, constitué d'une composante poreuse d'oxyde d'aluminium et de combinaisons de métaux résistants à l'hydrogène sous pression, caractérisé par une section transversale à trois branches d'un diamètre extérieur de 1,5 à 3,4 mm, et dont les branches sont réparties régulièrement autour du noyau du corps solide et reliées entre elles par des arcs concaves, et se distinguant par le fait que la section forme une torsade le long de l'axe longitudinal avec un angle de torsion alpha de 65 à 72°, que le rapport entre la longueur du corps moulé du catalyseur et la hauteur de torsion varie entre 0,3 et 0,6 et que le rapport entre la surface géométrique et le volume géométrique ( $d.\frac{o}{v}$ ) varie entre à 8,5 et 13.

2. Corps moulé de calalyseur selon revendication 1, caractérisé par le fait que la torsion autour de l'axe se fait dans le sens horlogique ou antihorlogique.

3. Corps moulé de catalyseur selon les revendications 1 et 2, caractérisé par ce qu'il contient des constituants, exprimés en pourcentage de masses, de 10 % de nickel comme oxyde de nickel, de 8 % d'oxyde molybdique et d'oxyde d'aluminum gamma avec 2 % de dioxyde de silicium comme composante poreuse.

4. Corps moulé de catalyseur selon les revendications 1 et 2, caractérisé par ce qu'il contient des constituants, exprimés en pourcentage de masses, de 4 % de nickel comme oxyde de nickel, de 20 % d'oxyde molybdique et d'oxyde d'aluminum gamma avec 2 % de dioxyde de silicium.

5. Corps moulé de catalyseur selon les revendications 1 et 2, caractérisé par ce que le constituant d'oxyde d'aluminium possède un volume poreux d'au moins 0,20 cm³ /g dans le domaine de rayons des pores allant de 7,5 à 50 nm.

Bild 1